(19) **Europäisches Patentamt / European Patent Office / Office européen des brevets**

(11) **EP 1 553 196 B1**

(12) **EUROPEAN PATENT SPECIFICATION**

(45) Date of publication and mention
of the grant of the patent:
**30.07.2008  Bulletin 2008/31**

(51) Int Cl.:
***C22C 33/04*** *(2006.01)*   ***C21B 13/10*** *(2006.01)*

(21) Application number: **03808887.8**

(22) Date of filing: **19.09.2003**

(86) International application number:
**PCT/JP2003/011960**

(87) International publication number:
**WO 2004/035847 (29.04.2004 Gazette 2004/18)**

(54) **FERRONICKEL AND PROCESS FOR PRODUCING RAW MATERIAL FOR FERRONICKEL SMELTING**

FERRONICKEL UND VERFAHREN ZUR HERSTELLUNG VON ROHMATERIAL FÜR DIE FERRONICKELVERHÜTTUNG

FERRONICKEL ET PROCEDE DE PRODUCTION D'UN MATERIAU BRUT DESTINE A LA FUSION DE FERRONICKEL

(84) Designated Contracting States:
**AT BE BG CH CY CZ DE DK EE ES FI FR GB GR HU IE IT LI LU MC NL PT RO SE SI SK TR**

(30) Priority: **18.10.2002  JP 2002304575**

(43) Date of publication of application:
**13.07.2005  Bulletin 2005/28**

(60) Divisional application:
**07014615.4 / 1 867 736**

(73) Proprietor: **KABUSHIKI KAISHA KOBE SEIKO SHO**
**Kobe-shi,**
**Hyogo 651-8585 (JP)**

(72) Inventors:
• **SUGITATSU, H,**
**c/o KABUSHIKI KAISHA KOBE SEIKO SHO**
**Kobe-shi,**
**Hyogo 651-8585 (JP)**
• **TANAKA, H.,**
**c/o KABUSHIKI KAISHA KOBE SEIKO SHO**
**Kobe-shi,**
**Hyogo 651-8585 (JP)**
• **HARADA, T.,**
**c/o KABUSHIKI KAISHA KOBE SEIKO SHO**
**Kobe-shi,**
**Hyogo 651-8585 (JP)**
• **MIYAHARA, I.,**
**c/o KABUSHIKI KAISHA KOBE SEIKO SHO**
**Kobe-shi,**
**Hyogo 651-8585 (JP)**

• **KOBAYASHI, I.,**
**c/o KABUSHIKI KAISHA KOBE SEIKO SHO**
**Kobe-shi,**
**Hyogo 651-8585 (JP)**

(74) Representative: **Müller-Boré & Partner**
**Patentanwälte**
**Grafinger Strasse 2**
**81671 München (DE)**

(56) References cited:
**WO-A1-99/20801**          **JP-A- 5 247 581**
**JP-A- 11 229 017**         **JP-B- 49 014 606**
**US-A- 5 567 224**

• **BAROZZI S: "METAL RECOVERY FROM STEEL WASTES BY THE INMETCO PROCESS" STEEL TIMES, FUEL & METALLURGICAL JOURNALS LTD. LONDON, GB, vol. 225, no. 5, May 1997 (1997-05), pages 191-192, XP000692297 ISSN: 0039-095X**
• **BANERJEE G N ET AL: "STUDIES ON REDUCTION ROASTING OF CHROMITE OVERBURDEN IN A MULTIPLE HEARTH FURNACE FOR EXTRACTION OF NICKEL AND COBALT" TRANSACTIONS OF THE INDIAN INSTITUTE OF METALS, INDIAN INSTITUTE OF METALS, CALCUTTA, IN, vol. 54, no. 5, October 2001 (2001-10), pages 193-198, XP009015045 ISSN: 0019-493X**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

• PARGETER J K ET AL: "operating experience at inmetco and application of the process to the production of dri" CONSERVATION AND RECYCLING, PERGAMON PRESS. OXFORD, GB, vol. 8, no. 3/4, 1985, pages 363-375, XP002254917

**Description**

The present invention relates to processes for producing ferronickel and particularly relates to a process for producing ferronickel with high efficiency using low-grade nickel oxide ore.

Examples of a process, currently used in our country, for producing ferronickel from nickel oxide ore include electric furnace processes and the Krupp-Ren process, and the electric furnace processes are categorized into a complete reduction process and a selective reduction process (see The Iron and Steel Institute of Japan, "TEKKO BINRAN fourth edition", Volume 2, Chapter 7, Section 3, Subsection 4, published by The Iron and Steel Institute of Japan, published on July 30, 2002).

In the complete reduction process, which is one of the electric furnace processes, nickel oxide ore is mixed with coal, the mixture is calcined in a rotary kiln, and the resulting mixture is melted and reduced in an electric furnace, whereby ferronickel is produced. In the selective reduction process, nickel oxide ore is mixed with coal, the mixture is preliminarily reduced in a rotary kiln, and the resulting mixture is melted and further reduction is completed in an electric furnace, whereby ferronickel is produced.

In the Krupp-Ren process, nickel oxide ore is mixed with anthracite, the mixture is pressed into briquettes, and the briquettes are heated and reduced in a rotary kiln, whereby a semi-solid containing luppe (metal) and slag are prepared. The semi-solid is water-granulated, and the luppe is then isolated and recovered from the semi-solid by a magnetic separation process or a flotation process, whereby ferronickel is produced.

In the above processes, rotary kilns are used and there are many problems, described below, characteristic of such rotary kilns. That is, since the rotary kilns are based on the principle that raw materials are moved by rolling motion, a large amount of dust is generated; hence, there is a problem in that a dam ring is apt to be formed. In order to prevent the dam ring from being formed, a technique of limiting the content of slag in a feedstock has been proposed (see, for example, Japanese Examined Patent Application Publication No. 48-43766, second page); however, there is a problem in that the degree of freedom in feedstock selection is low. Furthermore, in order to operate a kiln without trouble, the outlet temperature must be relatively low; hence, the kiln must be have a large size so as to provide a long retention time (see Japanese Unexamined Patent Application Publication No. 9-291319, second page). Therefore, there is a problem in that the fuel consumption is high because the kiln has a large surface area and the heat release is therefore high.

Furthermore, in the above processes, since nickel oxide and iron oxide in nickel oxide ore are reduced into metals at the same time but only the nickel oxide cannot be reduced into a metal, there is a problem in that ferronickel having a high Ni content cannot be produced from ore having a low Ni content. In order to solve that problem, techniques described below have been proposed.

One of the techniques is similar to the Krupp-Ren process. In this technique, nickel oxide ore is pretreated, the resulting ore is reduced in a firing furnace while the ore is in a semi-molten state, and metallic Fe and metallic Ni are recovered from the ore, whereby ferronickel is produced. In the step of reducing the ore in the firing furnace while the ore is in a semi-molten state, an Fe component and an Ni component are reduced in a strongly reducing atmosphere and only the Fe component is then oxidized in a strongly oxidizing atmosphere, whereby the content of Ni in the luppe is relatively increased and ferronickel having a high Ni content is produced (see Japanese Unexamined Patent Application Publication No. 5-186838).

The other one is also similar to the Krupp-Ren process. In this technique, nickel oxide ore is pretreated, the resulting ore is reduced in a firing furnace while the ore is in a semi-molten state, and metallic Fe and metallic Ni are recovered from the ore, whereby ferronickel is produced. In the step of reducing the ore in the firing furnace while the ore is in a semi-molten state, a predetermined amount of additional coal necessary to reduce (metallize) an Ni component and an Fe component to a desired level is divided into several portions, which are fed into the furnace intermittently or continuously, whereby the content of Ni in the luppe is relatively increased and ferronickel having a high Ni content is produced (see Japanese Unexamined Patent Application Publication No. 5-247581).

If an attempt to use the rotary kiln as a firing furnace is made to commercialize the above techniques (Japanese Unexamined Patent Application Publication Nos. 5-186838 and 5-247581) for producing ferronickel from the low-Ni content ore, the attempt is not successful due to the structure thereof. This is because it is necessary for the techniques to feed a gas or solid material into the kiln though a side wall of the kiln that is usually rotating and the structure of the kiln is therefore complicated; hence, trouble frequently occurs during the operation and the plant cost is high.

Even if the structural problem of the kiln is solved, the following problems that are characteristic of the rotary kiln still remain: a large amount of dust is generated, the dam ring is formed in the kiln, the plant area is large, and a large amount of heat is released from walls, which causes an increase in fuel consumption.

JP 11-229017 describes a process for producing a ferro alloy and an alloy steel comprising the step of producing a mixture of powdery oxide ore and carbon base refining agent and introducing the mixture into a rotary hearth furnace and heating the mixture in the furnace, whereby the ore in the mixture is reduced to make a pre-reduced grain.

Under the circumstances described above, it is an object of the present invention to provide a process for producing ferronickel having a high Ni content from low-grade nickel oxide ore (a feedstock containing nickel oxide) at low cost with high efficiency without trouble.

The solution to the above technical problem is achieved by providing the subject matter defined in the claims.

In particular, there is provided a process for producing ferronickel, comprising a mixing step of mixing a feedstock containing nickel oxide and iron oxide with a carbonaceous reductant to prepare a mixture; a reducing step of heating and reducing the mixture in a moving hearth furnace to prepare a reduced mixture; and a smelting step of smelting the reduced mixture in a smelting furnace to prepare ferronickel, wherein the retention time of the mixture placed in the moving hearth furnace is adjusted such that the Ni metallization degree of the reduced mixture is 40% or more and the Fe metallization degree of the reduced mixture is at least 15% less than the Ni metallization degree thereof.

Further, there is provided a process for producing ferronickel, comprising a mixing step of mixing a feedstock containing nickel oxide and iron oxide with a carbonaceous reductant to prepare a mixture; a reducing and melting step of heating and reducing the mixture in a moving hearth furnace to prepare a reduced mixture in which the Ni metallization degree is 40% or more and the Fe metallization degree is at least 15% less than the Ni metallization degree, wherein the retention time of the mixture placed in the moving hearth furnace is adjusted such that the Ni metallization degree of the reduced mixture is 40% or more and the Fe metallization degree of the reduced mixture is at least 15% less than the Ni metallization degree thereof, and to heat and melt the reduced mixture to prepare a reduced melt; a solidifying step of cooling the reduced melt in the moving hearth furnace to prepare a reduced solid or discharging the reduced melt from the moving hearth furnace to cool the reduced melt to prepare a reduced solid; and a separating step of separating the reduced melt into metal and slag to prepare ferronickel.

According to a first aspect of the present invention, a process for producing ferronickel includes a mixing step of mixing a feedstock containing nickel oxide and iron oxide with a carbonaceous reductant to prepare a mixture, a reducing step of heating and reducing the mixture in a moving hearth furnace to prepare a reduced mixture, and a smelting step of smelting the reduced mixture in a smelting furnace to prepare ferronickel.

In the process, since the moving hearth furnace is used to heat and reduce the mixture, the amount of dust generated is greatly decreased and the dam ring caused by the dust deposited on furnace walls is prevented from being formed. Thus, in order to prevent the dam ring from being formed, the slag content of the feedstock need not be adjusted; hence, the degree of freedom in feedstock selection is high. Since the retention time of the mixture placed in the moving hearth furnace is uniform, a large size apparatus such as a rotary kiln is not necessary and the plant is compact; hence, the plant area is small and the heat release is low.

In the process, the retention time of the mixture placed in the moving hearth furnace is adjusted such that the Ni metallization degree of the reduced mixture is 40% or more (preferably 85% or more) and the Fe metallization degree of the reduced mixture is at least 15% less than the Ni metallization degree thereof.

When the Fe metallization degree of the reduced mixture is adjusted to a value that is at least 15% less than the Ni metallization degree by controlling the retention time of the mixture placed in the moving hearth furnace, nickel oxide in ore having a low Ni content is primarily metallized but iron oxide therein is slowly metallized; hence, ferronickel having a high Ni content can be readily produced with high efficiency by smelting the reduced mixture in the smelting furnace. When the Ni metallization degree of the reduced mixture is 40% or more, the amount of heat necessary to reduce nickel oxide remaining in the reduced mixture in the smelting furnace is small; hence, there is an advantage in that the energy consumption of the smelting furnace can be reduced. The Ni metallization degree and the Fe metallization degree are defined as follows:

$$\text{Ni metallization degree (\%)} = [(\text{metallic Ni content (\% by mass)}) / (\text{total Ni content (\% by mass)})] \times 100$$

$$\text{Fe metallization degree (\%)} = [(\text{metallic Fe content (\% by mass)}) / (\text{total Fe content (\% by mass)})] \times 100$$

The process preferably further includes a reduced mixture-retaining step of cooling the reduced mixture to a temperature ranging from 450°C to 1100°C in the moving hearth furnace to maintain the reduced mixture at that temperature for 17 seconds or more or discharging the reduced mixture from the moving hearth furnace to place the reduced mixture in another vessel to cool the reduced mixture to a temperature ranging from 450°C to 1100°C in the vessel to maintain the reduced mixture at that temperature for 17 seconds or more.

When the reduced mixture is maintained at a temperature ranging from 450°C to 1100°C for a predetermined time, a reaction in which nickel oxide contained in the reduced mixture is reduced with metallic iron and metallic nickel and iron oxide are thereby formed is promoted, the reaction being expressed as NiO + Fe → Ni + FeO; hence, the Ni metallization degree can be increased but the Fe metallization degree can be decreased. That is, Ni can be more primarily reduced.

According to a second aspect of the present invention, a process for producing ferronickel includes a mixing step of mixing a feedstock containing nickel oxide and iron oxide with a carbonaceous reductant to prepare a mixture, a reducing and melting step of heating and reducing the mixture in a moving hearth furnace to prepare a reduced mixture in which the Ni metallization degree is 40% or more (preferably 85% or more) and the Fe metallization degree is at least 15% less than the Ni metallization degree to heat and melt the reduced mixture to prepare a reduced melt, a solidifying step of cooling the reduced melt in the moving hearth furnace to prepare a reduced solid or discharging the reduced melt from the moving hearth furnace to cool the reduced melt to prepare a reduced solid, and a separating step of separating the reduced melt into metal and slag to prepare ferronickel.

According to this process, since ferronickel having a high Ni content can be produced by reducing and melting ore having a low Ni content only in the moving hearth furnace, no melting furnace is used; hence, plant cost and the energy consumption can be greatly decreased.

A process for producing a feedstock for ferronickel production includes a mixing step of mixing a feedstock containing nickel oxide and iron oxide with a carbonaceous reductant to prepare a mixture and a reducing and melting step of heating and reducing the mixture in a moving hearth furnace to prepare a ferronickel feedstock in which the Ni metallization degree is 40% or more (preferably 85% or more) and the Fe metallization degree is at least 15% less than the Ni metallization degree.

In the feedstock-producing step, as well as the process of the first aspect, since the moving hearth furnace, which is of a stationary type, is used to heat and reduce the mixture, the amount of dust generated is greatly decreased and the dam ring caused by the dust deposited on furnace walls is prevented from being formed. Thus, in order to prevent the dam ring from being formed, the slag content of the feedstock need not be adjusted; hence, the degree of freedom in feedstock selection is high. Since the retention time of the mixture placed in the moving hearth furnace is uniform, a large size apparatus such as a rotary kiln is not necessary and the plant is compact; hence, the plant area is small and the heat release is low. When the Fe metallization degree is adjusted to a value that is at least 15% less than the Ni metallization degree by controlling the retention time of the mixture placed in the moving hearth furnace, nickel oxide in ore having a low Ni content is primarily metallized but iron oxide therein is slowly metallized; hence, a feedstock for producing ferronickel having a high Ni content can be readily produced with high efficiency. Furthermore, when the Ni metallization degree of the reduced mixture is 40% or more (preferably 85% or more), the amount of heat necessary to reduce nickel oxide in the smelting furnace in a subsequent step is small; hence, the energy consumption can be decreased.

Embodiments of the present invention will now be described in detail with reference to the accompanying drawings.

[First Embodiment]

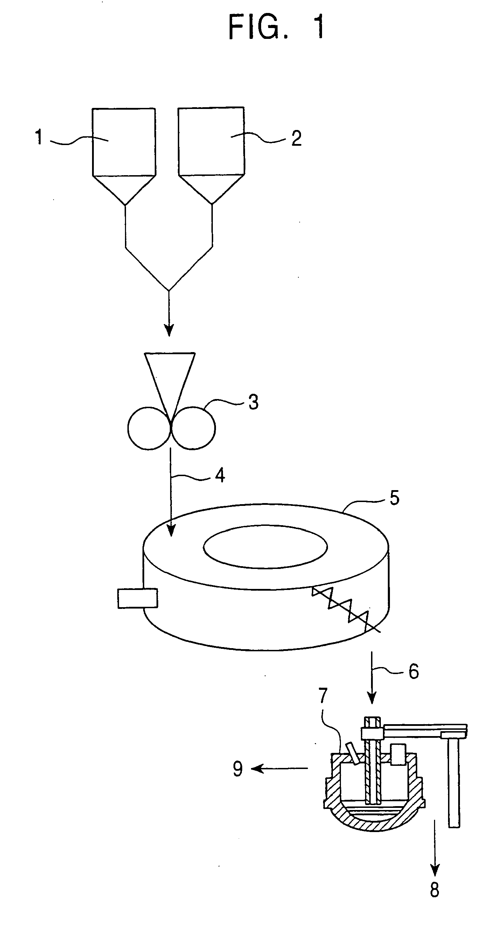

FIG. 1 shows steps for producing ferronickel according to an embodiment of the present invention. In the figure, reference numeral 1 represents a feedstock containing nickel oxide and iron oxide (hereinafter simply referred to as "a feedstock"), reference numeral 2 represents a carbonaceous reductant, reference numeral 3 represents an agglomerator, reference numeral 4 represents agglomerates (mixture), reference numeral 5 represents a moving hearth furnace, reference numeral 6 represents reduced agglomerates (reduced mixture), reference numeral 7 represents a smelting furnace, reference numeral 8 represents metal (ferronickel), and reference numeral 9 represents slag.

Examples of the feedstock 1 containing nickel oxide and iron oxide include a nickel oxide ore and a residue, generated in ferronickel- or nickel-manufacturing steps, such as kiln dust generated from ferronickel-manufacturing plants. Examples of the nickel oxide ore include garnierite usually used and low-grade nickel ores such as nickel-containing laterite and limonite. Those ores and residue may be used in combination. Since a rotary kiln is not used but the moving hearth furnace 5 that is of a stationary type is used, a dam ring is prevented from being formed and there are no limitations on slag components; hence, the degree of freedom in feedstock selection is high. When the feedstock 1 contains a large amount of water, the feedstock 1 is preferably dried in advance. The dryness of the feedstock 1 may be determined depending on the type of a mixing means (the agglomerator 3 is used in this embodiment) used in a subsequent mixing step. The carbonaceous reductant 2 contains fixed carbon, and any reductant such as coal, coke, charcoal, waste toner, or carbonized biomass may be used. Those materials may be used in combination.

The content of the carbonaceous reductant 2 in the agglomerates (mixture) 4 may be determined based on the amount of carbon necessary to reduce nickel oxide and iron oxide contained in the feedstock 1 in the moving hearth furnace 5, the amount of carbon consumed in reducing nickel oxide remaining in reduced agglomerates (reduced mixture) 6 in the smelting furnace 6, and the amount of carbon remaining in ferronickel.

[Mixing Step]: A mixer, which is not shown, is preferably used to mix the feedstock 1 and the carbonaceous reductant 2. The mixture may be directly fed into the moving hearth furnace 5; however, the mixture is preferably agglomerated with the agglomerator 3. This is because the agglomeration reduces the amount of dust generated from the moving hearth furnace 5 and the smelting furnace 7 and enhances the heat-transfer efficiency of the agglomerates (mixture) 4 placed in the moving hearth furnace 5 to increase the reduction rate. The agglomerates (mixture) 4 may contain an auxiliary feedstock such as flux. Examples of the agglomerator 3 include a compression molding machine such as a briquette press, a rotary pelletizer such as a disk pelletizer, and an extruder. When the content of water in the obtained agglomerates (mixture) 4 is high, the agglomerates (mixture) 4 may be dried before they are fed into the moving hearth furnace 5.

[Reducing Step]: The agglomerates (mixture) 4 are fed into the moving hearth furnace 5 and then heated and reduced at an atmospheric temperature ranging from 1000°C to 1400°C.

Examples of the moving hearth furnace 5 include known moving hearth furnaces having at least one bed on which the agglomerates (mixture) 4 are place and which horizontally moves in the furnace and also have a heating means for reduction or the like and there are no limitations on such moving hearth furnaces. Examples of the moving hearth furnaces include a rotary hearth furnace, a straight furnace, and a multi-hearth furnace. In those moving hearth furnaces, the amount of dust and the like generated is small because heating objects (agglomerates are herein used) are kept stationary. Furthermore, plant cost is relatively low, operation troubles hardly occurs, and the heat release is small because the surface are is less than that of rotary kilns; hence, the reduction efficiency is high.

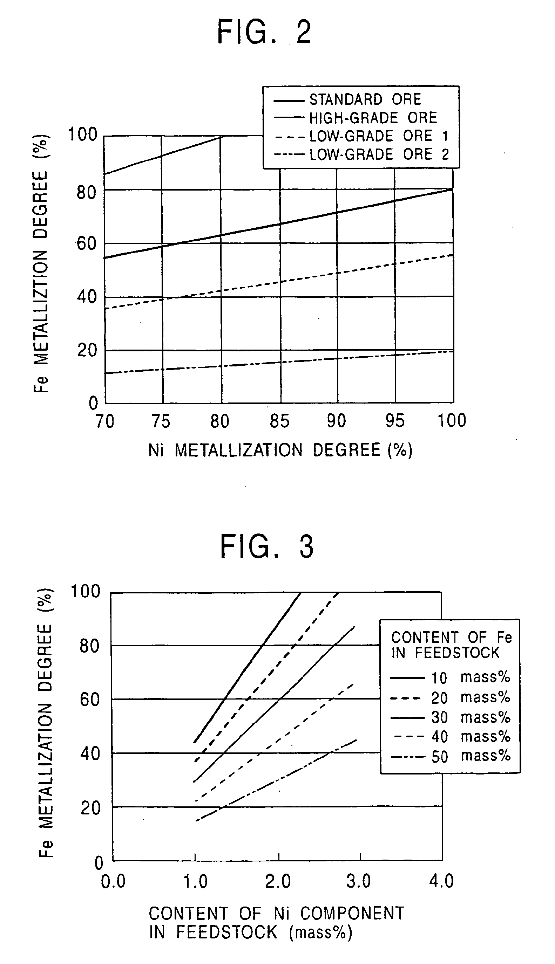

The retention time of which the agglomerates (mixture) 4 heated to a temperature ranging from 1000°C to 1400°C is preferably adjusted within a range of 3 to 20 minutes such that the relationship between the Ni metallization degree and the Fe metallization degree is satisfied as described below. That is, in the moving hearth furnace 5, the agglomerates (mixture) 4 are reduced such that the Ni metallization degree of the agglomerates (mixture) 4 is 40% or more (more preferably 50% or more and further more preferably 85% or more) and the Fe metallization degree of the agglomerates (mixture) 4 is at least 15% (more preferably at least 20%) less than the Ni metallization degree thereof. The Fe metallization degree is determined based on the Ni content and Fe content of the feedstock 1 and the target content of Ni in the ferronickel 8, which is a product. In order to produce the ferronickel 8 having an Ni content of, for example, 16%, the Ni metallization degree and Fe metallization degree shown in FIG. 2 must be achieved depending on the kinds of nickel oxide ore (see Table 1) used for the feedstock 1. For the standard ore, except for the high-grade ore, the Fe metallization degree must be 15% to 20% less than the Ni metallization degree. For the low-grade ores, the Fe metallization degree must be less than the above.

Table 1

| Kinds of Nickel Oxide Ore | Content (% by mass) | |
|---|---|---|
| | Ni | Fe |
| Standard Ore | 2.4 | 14.7 |
| High-grade Ore | 2.5 | 9.8 |
| Low-grade Ore 1 | 1.7 | 15.7 |
| Low-grade Ore 2 | 1.3 | 34.5 |

FIG. 3 shows the target Fe metallization degree determined based on the Ni content and Fe content of the feedstock 1. The target Fe metallization degree is in proportion to the Ni content of the feedstock 1 but is in inverse proportion to the Fe content of the feedstock 1. In FIG. 3, the content of Ni in the ferronickel 8 is 16% and the Ni metallization degree of the reduced agglomerates (reduced mixture) 6 is 90%. In order to increase the Ni content of the ferronickel 8 from 16% to, for example, 20%, the Fe metallization degree must be further decreased.

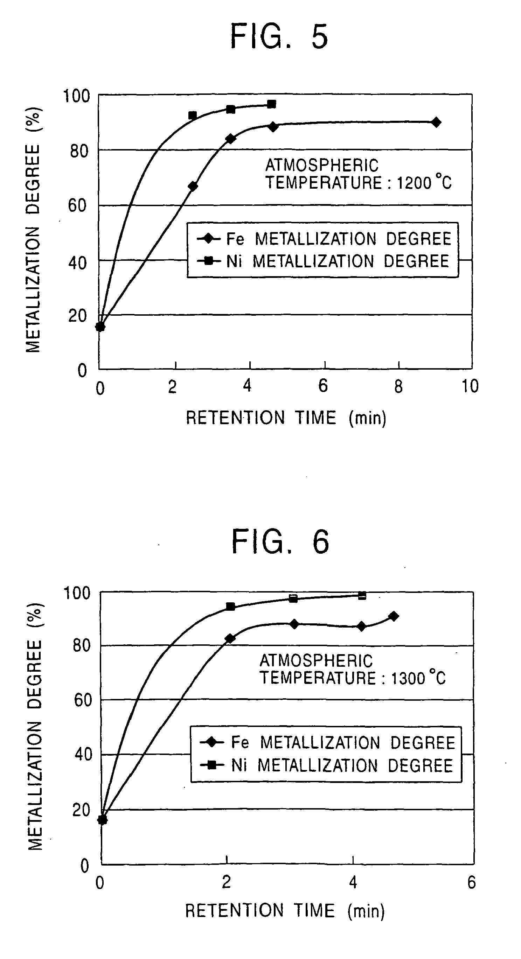

The Ni metallization degree and the Fe metallization degree may be adjusted by varying the heating temperature and the retention time based on a difference in reduction rate between both components. In general, the Ni component is more readily reduced (metallized) than the Fe component because the affinity of Ni to oxygen is less than that of Fe. Although the difference between the Ni metallization degree and the Fe metallization degree is small when the retention time is short, an increase in the retention time allows the Ni metallization degree and the Fe metallization degree to approach 100% if there is a sufficient amount of a reductant. Furthermore, an increase in heating temperature promotes the reduction of FeO, whereby the difference between the Ni metallization degree and the Fe metallization degree is decreased (see FIGS. 5 and 6). Therefore, the heating temperature and the retention time are adjusted depending on the reduction efficiency such that the Ni metallization degree slightly exceeds the Fe metallization degree.

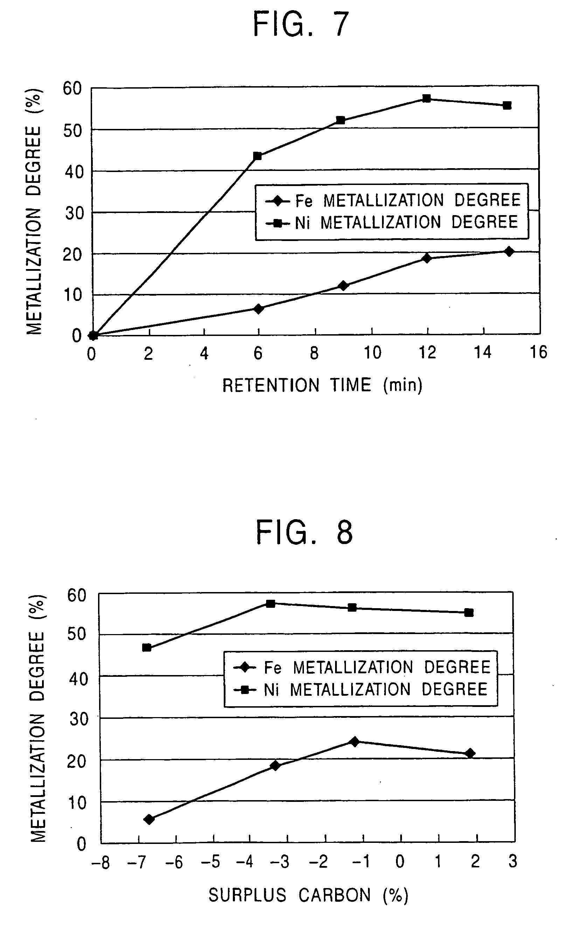

On the other hand, as described in examples described below, a decrease in the surplus of carbon (%) causes a decrease in the Fe metallization degree (see FIG. 8) and an increase in the strength (for example, the crushing strength) of reduced agglomerates, whereby the agglomerates can be readily handled and the yield of a smelting operation is increased. Thus, the surplus of carbon is preferably 0% or less, more preferably -2% or less, and first more preferably -4% or less.

The Ni metallization degree and Fe metallization degree of the reduced agglomerates (reduced mixture) 6 can be controlled by varying the content of the carbonaceous reductant 2 in the agglomerates (mixture) 4 and can also be controlled by varying the retention time. When the metallization degrees are controlled by varying the content and the retention time, the degree of freedom in feedstock selection and the Ni content of the ferronickel 8 can be increased.

The reduced agglomerates (reduced mixture) 6 treated in the moving hearth furnace 5 are usually cooled to about 1000°C with a radiant cooler or coolant sprayer placed in the moving hearth furnace 5 and then discharged with a discharging unit.

[Step of Retaining Reduced Mixture]: Unreduced nickel oxide is reduced by metallic Fe while the reduced agglomerates (reduced mixture) 6 are cooled. In particular, a reaction expressed as $NiO + Fe \rightarrow Ni + FeO$ occurs to cause an increase in the Ni metallization degree but a decrease in Fe metallization degree, whereby the Ni component in the reduced agglomerates (reduced mixture) 6 is primarily reduced. In order to actively use the reaction, the reduced agglomerates (reduced mixture) 6 are preferably cooled to a temperature ranging from 450°C to 1100°C and maintained at that temperature for 17 seconds or more while the reduced agglomerates (reduced mixture) 6 are placed in the moving hearth furnace 5 or placed in another vessel, which is not shown, after the reduced agglomerates (reduced mixture) 6 are discharged from the moving hearth furnace 5. The reason for setting the lower limit of the temperature to 450°C is that the reaction rate is too low and the advantage is therefore low when the temperature is less than 450°C. The lower limit is more preferably 650°C. In contrast, the reason for setting the upper limit of the temperature to 1100°C is that iron oxide and the carbonaceous reductant remaining in the reduced agglomerates (reduced mixture) 6 react each other and the chain reactions expressed as $FeO + CO \rightarrow Fe + CO_2$ and $CO_2 + C \rightarrow 2CO$ are promoted when the temperature is more than 1100°C, whereby the Fe metallization degree is increased. The upper limit is more preferably 1000°C.

The reason for setting the lower limit of the retaining time to 17 seconds during which the reduced agglomerates (reduced mixture) 6 are maintained at a temperature within the above range is described below. The following equation has been obtained by formulating the correlation between the reduction time and Ni metallization degree (see FIG. 6) obtained from a reduction experiment (an atmospheric temperature of 1300°C) performed in an example described below:

$$MetNi = 83.9 \times [1 - exp(-t/46)] + 15.3$$

wherein MetNi represents the Ni metallization degree (%) and t represents the reduction time (s).

According to the above equation, it takes 17 seconds to reduce 30% of unreduced nickel oxide (NiO) contained in the reduced agglomerates (reduced mixture) 6 into metallic Ni; hence, the lower limit of the retaining time is specified as 17 seconds. Considering that the upper limit (1100°C) of the cooling temperature is lower than the atmospheric temperature (1300°C) of the reduction experiment, the lower limit of the retaining time is preferably set to 20 seconds, which is slightly longer than 17 seconds. Furthermore, according to the equation, it takes 32 seconds to reduce 50% of unreduced nickel oxide (NiO) contained in the reduced agglomerates (reduced mixture) 6 into metallic Ni; hence, the lower limit of the retaining time is more preferably 32 seconds and further more preferably 40 seconds. As long as the reduced agglomerates (reduced mixture) 6 are maintained at a temperature within the above range, the retaining time may include the time elapsed during the transfer of the reduced agglomerates (reduced mixture) 6 that is discharged from the moving hearth furnace 5 or the vessel and then fed into the smelting furnace 7.

[Melting Step]: The reduced agglomerates (reduced mixture) 6 discharged from the moving hearth furnace 5 or the vessel are preferably fed into the smelting furnace 7 directly in such a manner that the reduced agglomerates (reduced mixture) 6 are not further cooled but maintained at a high temperature. The smelting furnace 7 may be directly connected to an outlet of the moving hearth furnace 5 or the vessel with a chute placed therebetween. The reduced agglomerates (reduced mixture) 6 may be fed into the smelting furnace 7 using a conveying unit such as a conveyer or using a container for temporarily storing the reduced agglomerates (reduced mixture) 6. When the smelting furnace 7 is not placed close to the moving hearth furnace 5 or is not operated, the reduced agglomerates (reduced mixture) 6 may be cooled to atmospheric temperature and then treated as a semi-product (feedstock for ferronickel production) during the storage or the transportation. Alternatively, the reduced agglomerates (reduced mixture) 6 may be hot-briquetted to reduce the surface area in such a manner that the reduced agglomerates (reduced mixture) 6 are not cooled but maintained at a high temperature, whereby the surface area thereof is deceased. The hot-briquetted reduced agglomerates (reduced mixture) 6 are cooled and then treated as a semi-product (feedstock for ferronickel production) having high re-oxidation resistance during the storage or the transportation.

Examples of the smelting furnace 7 include an electric furnace. When the electric furnace is used, the content of carbon in molten metal, the voltage of the electric furnace, the positions of electrodes arranged in the electric furnace, the amount of oxygen, and the amount of agitation gas are preferably adjusted such that the nickel yield is increased and the reduction of iron is suppressed. A smelting furnace using fossil energy such as coal, fuel oil, natural gas may be used. The flux or the like may be fed into the smelting furnace 7 according to needs and the reduced agglomerates (reduced mixture) 6 are melted at a high temperature ranging from 1400°C to 1700°C, whereby the reduced agglomerates (reduced mixture) 6 are separated into the metal 8 and the slag 9. The metal 8, which corresponds to the ferronickel 8, is withdrawn and then additionally refined according to needs, whereby commercial ferronickel is produced. The slag 9 can be used for concrete aggregates.

[Second Embodiment]

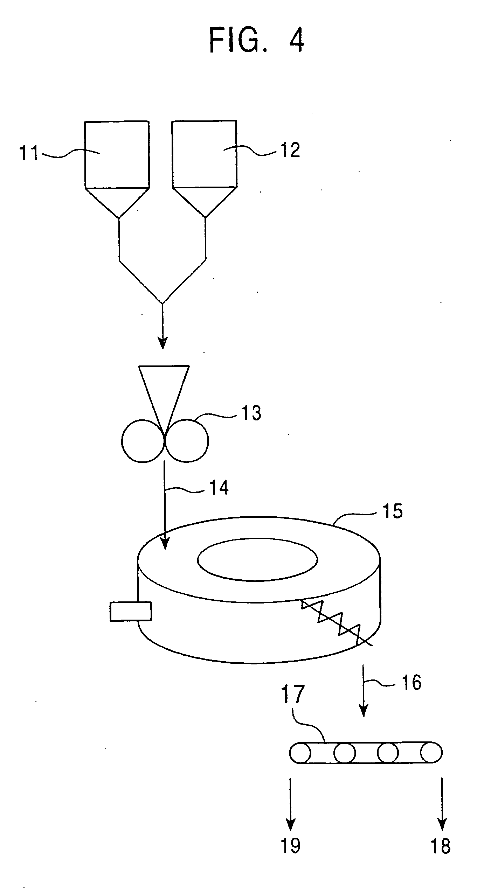

FIG. 4 shows steps of producing ferronickel according to another embodiment of the present invention. In the figure, reference numeral 11 represents a feedstock containing nickel oxide and iron oxide (hereinafter simply referred to as "a feedstock"), reference numeral 12 represents a carbonaceous reductant, reference numeral 13 represents an agglomerator, reference numeral 14 represents agglomerates (mixture), reference numeral 15 represents a moving hearth furnace, reference numeral 16 represents a reduced solid, reference numeral 17 represents a screen, reference numeral 18 represents metal (ferronickel), and reference numeral 19 represents slag.

In the second embodiment, the feedstock 11, the carbonaceous reductant 12, the agglomerator 13, and the agglomerates (mixture) 14 are the same as the feedstock 1, carbonaceous reductant 2, agglomerator 3, and agglomerates (mixture) 4 of the first embodiment, respectively, and a mixing step is also the same as that of the first embodiment; hence, the description is omitted.

[Reducing/Melting Step]: The agglomerates (mixture) 14 are fed into the moving hearth furnace 15 and then heated and reduced at an atmospheric temperature ranging from 1000°C to 1400°C. According to the same concept as that described in the first embodiment, the retention time of the agglomerates (mixture) 14 heated to a temperature ranging from 1000°C to 1400°C may be adjusted within a range of 3 to 20 minutes such that the relationship between the Ni metallization degree and the Fe metallization degree satisfies conditions described below. That is, in the above temperature range, the agglomerates (mixture) 14 are reduced in reduced agglomerates (reduced mixture) such that the Ni metallization degree of the reduced agglomerates (reduced mixture) is 40% or more (more preferably 50% or more, further more preferably 85% or more, most preferably 90% or more) and the Fe metallization degree thereof is at least 15% (more preferably at least 20%) less than the Ni metallization degree. Subsequently, the reduced agglomerates (reduced mixture) are heated and melted at an atmospheric temperature ranging from 1100°C to 1500°C, which is higher than that described above, in the moving hearth furnace 15, whereby reduced melt is prepared. The retention time of the reduced agglomerates (reduced mixture) heated to an atmospheric temperature ranging from 1100°C to 1500°C may be adjusted within a range of 0.5 to 10 minutes such that the reduced agglomerates (reduced mixture) are completely melted and separated into metal and slag. The atmospheric temperature of the moving hearth furnace 15 is varied in two steps in the above procedure but may not be varied, and the agglomerates (mixture) 14 may be heated to an atmospheric temperature ranging from 1100°C to 1500°C in one step, whereby the agglomerates (mixture) 14 are melted and reduced at the same time. The latter procedure provides the reduced melt in a shorter time. Both the metal and slag may be melted and only either one may be melted. For example, only the metal may be melted, whereby the metal is isolated from the slag.

[Solidifying Step]: The reduced melt is cooled to about 1000°C in or outside the moving hearth furnace 15, whereby the reduced melt is solidified into the reduced solid 16. Examples of a cooling/solidifying unit placed in the moving hearth furnace 15 include the radiant cooler and coolant sprayer described in the first embodiment. In order to cool and solidify the reduced melt discharged from the moving hearth furnace 15, a method such as water granulation may be used.

[Separating Step]: The reduced solid is separated into the metal (ferronickel) 18 and the slag 19 with the screen 17. Metal components may be recovered from the resulting slag 19 by a method such as a magnetic separation process or a floatation process according to needs. The resulting metal 18 is then additionally refined according to needs, whereby commercial ferronickel is produced. Alternatively, the metal 18 may be used as a semi-product (feedstock for ferronickel production), which is fed into a smelting furnace. In comparison between the semi-products of the functions as embodiments, the reduced agglomerates (reduced mixture) of the first embodiment contain slag components but the metal 18 of the second embodiment does not contain such slag components. Therefore, in the second embodiment, energy consumed in melting the slag components in the smelting furnace is not necessary, whereby energy consumption of the smelting furnace is greatly reduced. Furthermore, the semi-product has reduced weight depending on the weight of the removed slag components and the storage cost and transportation cost thereof can therefore be reduced; hence, it is preferable to use a process of the present invention in areas where nickel oxide ore is produced. For convenience of storage and transportation, agglomeration or the like may be performed.

FIG. 1 is a flow chart showing steps of producing ferronickel according to a first embodiment of the present invention.

FIG. 2 is a graph showing the relationship between the Ni metallization degree and Fe metallization degree of a reduced mixture when the content of Ni in ferronickel is 16% by mass.

FIG. 3 is a graph showing the relationship between the Ni content of a feedstock and the Fe metallization degree and the relationship between the Fe content thereof and the Fe metallization degree when the content of Ni in ferronickel is 16% by mass and the Ni metallization degree of a reduced mixture is 90%.

FIG. 4 is a flow chart showing steps of producing ferronickel according to another embodiment of the present invention.

FIG. 5 is a graph showing the relationship between the retention time and the Ni metallization degree and the relationship between the retention time and the Fe metallization degree when the atmospheric temperature is 1200°C.

FIG. 6 is a graph showing the relationship between the retention time and the Ni metallization degree and the relationship between the retention time and the Fe metallization degree when the atmospheric temperature is 1300°C.

FIG. 7 is a graph showing the relationship between the retention time and the Ni metallization degree and the relationship between the retention time and the Fe metallization degree when the atmospheric temperature is 1200°C.

FIG. 8 is a graph showing the relationship between the surplus of carbon (%) and the Ni metallization degree and the relationship between the surplus of carbon (%) and the Fe metallization degree when the atmospheric temperature is 1200°C.

FIG. 9 is a graph showing the relationship between the heating temperature and the Ni metallization degree and the relationship between the heating temperature and the Fe metallization degree when the retention time is 15 minutes.

Reference Numerals

1 and 11: feedstock containing nickel oxide and iron oxide
2 and 12: carbonaceous reductant
3 and 13: agglomerator
4 and 14: agglomerates (mixture)
5 and 15: moving hearth furnace
6: reduced agglomerates (reduced mixture)
7: smelting furnace
8 and 18: metal (ferronickel)
9 and 19: slag
16: reduced solid
17: screen

[EXAMPLE 1]

In order to assess the reduction state of a feedstock mixture smelted in a moving hearth furnace according to the present invention, a reduction experiment described below was performed using a small-sized furnace for laboratory use.

A feedstock, containing nickel oxide and iron oxide, having the composition shown in Table 2 was mixed with a carbonaceous reductant containing coke powder (a content of fixed carbon: 77.7 mass percent), the ratio of the feedstock to the carbonaceous reductant being 85.7 to 14.3 on a mass basis. A certain amount of water was added to the mixture and the resulting mixture was formed into pellets having a diameter of 13 mm with a small-sized disk pelletizer. Those pellets were dried, fed into the small-sized furnace in a batch mode, and then heated and reduced in such a manner that the atmospheric temperature is maintained constant and the retention time is varied. The reduced pellets were chemically analyzed for composition, whereby the Ni metallization degree and the Fe metallization degree were determined. A nitrogen atmosphere was used and the atmospheric temperature was varied in two levels: 1200°C and 1300°C.

Table 2

| (Unit: mass percent) | | | |
|---|---|---|---|
| T. Fe | FeO | M. Fe | T. Ni |
| 27.5 | 3.0 | 5.5 | 2.5 |

FIGS. 5 and 6 each show a correlation between the retaining time (retention time) and the Ni metallization degree and a correlation between the retaining time and the Fe metallization degree, those correlations being obtained from the reduction experiment. The correlations shown in FIG. 5 were obtained at an atmospheric temperature of 1200°C and the correlations shown in FIG. 6 were obtained at an atmospheric temperature of 1300°C. Both figures illustrate that a Ni component is primarily reduced as compared with a Fe component. Furthermore, the reduction rate determined at 1300°C is greater than that determined at 1200°C. For example, FIG. 5 illustrates that the Ni metallization degree reaches about 90% and the Fe metallization degree remains at about 60% when the atmospheric temperature is 1200°C and the retaining time (retention time) is 2 minutes. Thus, a semi-product in which the Ni metallization degree has been maximized and the Fe metallization degree has been minimized can be obtained by appropriately adjusting the retention time depending on heating conditions such as the atmospheric temperature. Since the reduction state of the feedstock mixture in an actual moving hearth furnace is affected by the difference in heating rate due to the shape or size of the furnace and the gas composition of the atmosphere, the optimum retention time can be determined by actually measuring the Ni metallization degree and the Fe metallization degree, with the retention time varied in the moving hearth furnace.

[EXAMPLE 2]

A mixture consisting of 94 parts by mass (dry basis) of nickel oxide ore and 6 parts by mass (dry basis) of coal was formed into briquettes having a volume of 5.5 cm$^3$ with a briquette press. The nickel oxide ore had a total Ni content of 2.4%, a total Fe content of 14.7%, a $SiO_2$ content of 35.5%, and an MgO content of 25.8% and the coal had a fixed carbon content of 74.0%, a volatile matter content of 15.5%, and an ash content of 10.5% on a mass basis. The briquettes were fed into a rotary hearth furnace and then reduced into a semi-product (reduced briquettes) at an atmospheric temperature ranging from 1100°C to 1300°C with a retention time of 5 minutes, the Fe metallization degree of the semi-product being about 60%. In the above operation, the yield of the semi-product (reduced briquettes) obtained from the rotary hearth furnace was 88 parts by mass, the Ni metallization degree of the semi-product being about 98%.

The semi-product (reduced briquettes) maintained at 1000°C was fed into an electric furnace and then smelted, whereby 11 parts by mass of crude ferronickel having an Ni content of 20% to 21% by mass and 80 parts by mass of slag having an FeO content of about 10% by mass were obtained. The electric consumption of the electronic furnace was 13000 kWh per ton of Ni. This value is less than that of a known electric furnace process (selective reduction process) using a rotary kiln as a pre-reducing furnace. In the process, the electric consumption is about 20000 kWh per ton of Ni.

[EXAMPLE 3]

The same feedstock and carbonaceous reductant as those used in the Example 2 were used. A mixture consisting of 93 parts by mass (dry basis) of the nickel oxide ore and 7 parts by mass (dry basis) of coal was mixed with a certain amount of water, and the resulting mixture was formed into pellets having a diameter of 18 mm with a disk pelletizer. The pellets were dried with a dryer, fed into a rotary hearth furnace, and then heated and reduced at an atmospheric temperature ranging from 1300°C to 1350°C, whereby a Ni component was substantially completely metallized. After the Fe metallization degree reached about 60%, the resulting pellets were heated at an atmospheric temperature ranging from 1350°C to 1450°C, whereby the pellets were melted.

The melt was then cooled and solidified with a chill plate (radiant cooler) placed in the rotary hearth furnace, and the solid was discharged from the rotary hearth furnace and then separated into metal (crude ferronickel) and slag with a screen. As a result, the following crude ferronickel and slag were obtained: 11 parts by mass of the crude ferronickel having a Ni content of 20%, a Fe content of 74%, and a C content of 2% and 77 parts by mass of the slag having a FeO content of 10% on a mass basis.

In the Examples 2 and 3, no binder was used for agglomeration; however, an appropriate binder may be used when the agglomerates have an insufficient strength.

[EXAMPLE 4]

A mixture consisting of 96.5 parts by mass (dry basis) of nickel oxide ore that is difficult in reducing and 3.5 parts by mass (dry basis) of coal was formed into tablets having a diameter of 25 mm with a tablet press. The nickel oxide ore had a total Ni content of 2.1%, a total Fe content of 18.8%, a $SiO_2$ content of 35.0%, and an MgO content of 19.5% and the coal had a fixed carbon content of 72%, a volatile matter content of 18%, and an ash content of 10% on a mass basis. The tablets were fed into a rotary hearth furnace and then reduced at an atmospheric temperature of 1200°C. FIG. 7 shows a correlation between the retaining time (retention time) and the Ni metallization degree and a correlation between the retaining time and the Fe metallization degree, those correlations being obtained from the reduction experiment.

The experiment shows that the Ni component is more rapidly reduced as compared with the Fe component. Since the nickel oxide ore used in the experiment is difficult in reducing, the Ni metallization degree is saturated when it is reached to about 56%. However, if the ore is heated and reduced at 1200°C for 6 minutes or more, the Ni metallization degree is 40% or more and the Fe metallization degree is at least 15% less than the Ni metallization degree.

[EXAMPLE 5]

A mixture was prepared in such a manner that the same feedstock and coal as those used in Example 4 were used but the blend ratio of the nickel oxide ore to the coal was varied, and the mixture was formed into tablets having a diameter of 25 mm. The tablets were fed into a rotary hearth furnace and then reduced at an atmospheric temperature of 1200°C for 12 minutes (retention time), whereby the difference between the Ni metallization degree and the Fe metallization degree was determined. The results are shown in FIG. 8.

The results indicate that a decrease in "the surplus of carbon (%)" specified below causes a decrease in the Fe metallization degree. When the surplus of carbon is small, the reduced tablets have high strength (for example, crushing strength) and are therefore easy in handling and the melting yield is high.

```
the surplus of carbon (%) = (the mass percentage of carbon

in an unreduced mixture) - (the mass percentage of oxygen bonded to Fe or Ni in the unreduced mixture) × 12/16
```

[EXAMPLE 6]

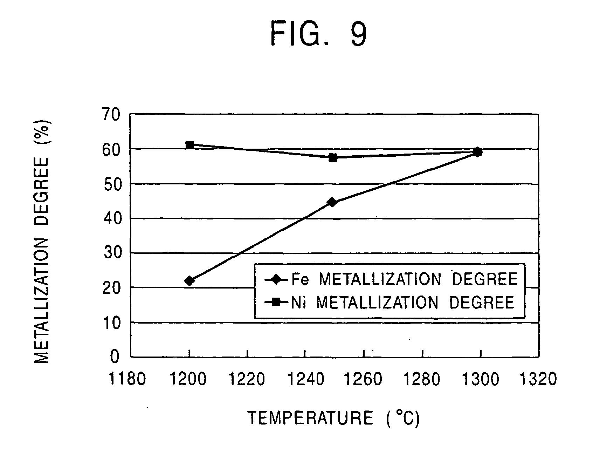

The same feedstock and coal as those used in Examples 4 and 5 were used. A mixture consisting of 90.5 parts by mass of the nickel oxide ore and 9.5 parts by mass of the coal was formed into tablets having a diameter of 25 mm. The tablets were fed into a rotary hearth furnace and then reduced at an atmospheric temperature of 1200°C, 1250°C, or 1300°C for 15 minutes, whereby the difference between the Ni metallization degree and the Fe metallization degree were determined. The results are shown in FIG. 9.

The results indicate that an increase in temperature causes a decrease in difference between the Ni metallization degree and the Fe metallization degree. However, considering these results and the results of the above examples, even if the heating and reduction temperature is 1300°C, the Fe metallization degree can be adjusted to a value that is at least 15% less than the Ni metallization degree by decreasing the retention time and/or controlling the content of the reductant (controlling the surplus of carbon).

As described above, the present invention provides a process that is useful in producing ferronickel having a high Ni content at low cost with high efficiency and reproducibility even if a low-grade feedstock containing nickel oxide is used.

**Claims**

1.  A process for producing ferronickel, comprising:

    a mixing step of mixing a feedstock containing nickel oxide and iron oxide with a carbonaceous reductant to prepare a mixture;
    a reducing step of heating and reducing the mixture in a moving hearth furnace to prepare a reduced mixture; and
    a smelting step of smelting the reduced mixture in a smelting furnace to prepare ferronickel,
    wherein the retention time of the mixture placed in the moving hearth furnace is adjusted such that the Ni metallization degree of the reduced mixture is 40% or more and the Fe metallization degree of the reduced mixture is at least 15% less than the Ni metallization degree thereof.

2.  The process for producing ferronickel according to claim 1, wherein the Ni metallization degree is 85% or more.

3.  The process for producing ferronickel according to claim 1 or 2, further comprising a reduced mixture-retaining step of cooling the reduced mixture to a temperature ranging from 450°C to 1100°C in the moving hearth furnace to maintain the reduced mixture at that temperature for 17 seconds or more or discharging the reduced mixture from the moving hearth furnace to place the reduced mixture in another vessel to cool the reduced mixture to a temperature ranging from 450°C to 1100°C in the vessel to maintain the reduced mixture at that temperature for 17 seconds or more.

4. A process for producing ferronickel, comprising:

a mixing step of mixing a feedstock containing nickel oxide and iron oxide with a carbonaceous reductant to prepare a mixture;

a reducing and melting step of heating and reducing the mixture in a moving hearth furnace to prepare a reduced mixture in which the Ni metallization degree is 40% or more and the Fe metallization degree is at least 15% less than the Ni metallization degree, wherein the retention time of the mixture placed in the moving hearth furnace is adjusted such that the Ni metallization degree of the reduced mixture is 40% or more and the Fe metallization degree of the reduced mixture is at least 15% less than the Ni metallization degree thereof, and to heat and melt the reduced mixture to prepare a reduced melt;

a solidifying step of cooling the reduced melt in the moving hearth furnace to prepare a reduced solid or discharging the reduced melt from the moving hearth furnace to cool the reduced melt to prepare a reduced solid; and

a separating step of separating the reduced melt into metal and slag to prepare ferronickel.

5. The process for producing ferronickel according to claim 4, wherein the Ni metallization degree is 85% or more.

**Patentansprüche**

1. Verfahren zur Herstellung von Ferronickel, umfassend:

einen Mischschritt des Mischens eines Ausgangsmaterials, welches Nickeloxid und Eisenoxid mit einem kohlenstoffhaltigen Reduktionsmittel enthält, um ein Gemisch herzustellen,

einen Reduktionsschritt des Erwärmens und Reduzierens des Gemischs in einem sich bewegenden Herdofen, um ein reduziertes Gemisch herzustellen, und

einen Schmelzschritt des Schmelzens des reduzierten Gemischs in einem Schmelzofen, um Ferronickel herzustellen,

wobei die Verweilzeit des in dem sich bewegenden Herdofen angeordneten Gemischs derart eingestellt wird, daß das Ni-Metallisierungsausmaß des reduzierten Gemischs 40% oder mehr beträgt und das Fe-Metallisierungsausmaß des reduzierten Gemischs mindestens 15% weniger als das Ni-Metallisierungsausmaß davon beträgt.

2. Verfahren zur Herstellung von Ferronickel nach Anspruch 1, wobei das Ni-Metallisierungsausmaß 85% oder mehr beträgt.

3. Verfahren zur Herstellung von Ferronickel nach Anspruch 1 oder 2, ferner umfassend einen reduziertes Gemisch-Halteschritt des Kühlens des reduzierten Gemischs auf eine Temperatur in einem Bereich von 450°C bis 1100°C in einem sich bewegenden Herdofen, um das reduzierte Gemisch bei dieser Temperatur für 17 Sekunden oder mehr zu halten, oder das Austragen des reduzierten Gemischs aus dem sich bewegenden Herdofen, um das reduzierte Gemisch in einem anderen Gefäß anzuordnen, um das reduzierte Gemisch in dem Gefäß auf eine Temperatur in einem Bereich von 450°C bis 1100°C zu bringen, um das reduzierte Gemisch bei dieser Temperatur für 17 Sekunden oder mehr zu halten.

4. Verfahren zur Herstellung von Ferronickel, umfassend:

einen Mischschritt des Mischens eines Ausgangsmaterials, welches Nickeloxid und Eisenoxid mit einem kohlenstoffhaltigen Reduktionsmittel enthält, um ein Gemisch herzustellen,

einen Reduktions- und Schmelzschritt des Erwärmens und Reduzierens des Gemischs in einem sich bewegenden Herdofen, um ein reduziertes Gemisch herzustellen, in dem das Ni-Metallisierungsausmaß 40% oder mehr beträgt und

das Fe-Metallisierungsausmaß mindestens 15% weniger als das Ni-Metallisierungsausmaß beträgt, wobei die Verweilzeit des Gemischs, welches in dem sich bewegenden Herdofen angeordnet ist, derart eingestellt wird, daß das Ni-Metallisierungsausmaß des reduzierten Gemisches 40% oder mehr beträgt und das Fe-Metallisierungsausmaß des reduzierten Gemischs mindestens 15% weniger als das Ni-Metallisierungsausmaß davon beträgt, und um das reduzierte Gemisch zu erwärmen und zu schmelzen, um eine reduzierte Schmelze herzustellen,

einen Verfestigungsschritt des Kühlens der reduzierten Schmelze in dem sich bewegenden Herdofen, um einen reduzierten Feststoff herzustellen, oder das Austragen der reduzierten Schmelze aus dem sich bewegenden Herdofen, um die reduzierte Schmelze zu kühlen, um einen reduzierten Feststoff herzustellen, und

einen Trennschritt des Trennens der reduzierten Schmelze in Metall und Schlacke, um Ferronickel herzustellen.

5. Verfahren zur Herstellung von Ferronickel nach Anspruch 4, wobei das Ni-Metallisierungsausmaß 85% oder mehr beträgt.


**Revendications**

1. Procédé de production de ferronickel, comprenant :

    une étape de mélange consistant à mélanger un produit de départ contenant de l'oxyde de nickel et de l'oxyde de fer avec un réducteur carboné pour préparer un mélange ;
    une étape de réduction consistant à chauffer et à réduire le mélange dans un four à sole mobile pour préparer un mélange réduit ; et
    une étape de fusion consistant à faire fondre le mélange réduit dans un four de fusion pour préparer du ferronickel, dans lequel le temps de rétention du mélange placé dans le four à sole mobile est ajusté de telle sorte que le degré de métallisation de Ni du mélange réduit soit de 40 % ou plus et que le degré de métallisation de Fe du mélange réduit soit au moins 15 % inférieur au degré de métallisation de Ni dudit mélange réduit.

2. Procédé de production de ferronickel selon la revendication 1, dans lequel le degré de métallisation de Ni est de 85 % ou plus.

3. Procédé de production de ferronickel selon la revendication 1 ou 2, comprenant en outre une étape de retenue du mélange réduit consistant à refroidir le mélange réduit à une température variant de 450°C à 1100 °C dans le four à sole mobile pour maintenir le mélange réduit à cette température pendant 17 secondes ou plus ou à décharger le mélange réduit du four à sole mobile pour placer le mélange réduit dans un autre récipient afin de réduire le mélange réduit à une température variant de 450 °C à 1100 °C dans le récipient pour maintenir le mélange réduit à cette température pendant 17 secondes ou plus.

4. Procédé de production de ferronickel, comprenant :

    une étape de mélange consistant à mélanger un produit de départ contenant de l'oxyde de nickel et de l'oxyde de fer avec un réducteur carboné pour préparer un mélange ;
    une étape de réduction et de fusion consistant à réduire le mélange dans un four à sole mobile pour préparer un mélange réduit dans lequel le degré de métallisation de Ni est de 40 % ou plus et le degré de métallisation de Fe est au moins 15 % inférieur au degré de métallisation de Ni, dans lequel le temps de rétention du mélange placé dans le four à sole mobile est ajusté de telle sorte que le degré de métallisation de Ni du mélange réduit soit de 40 % ou plus et que le degré de métallisation de Fe du mélange réduit soit au moins 15 % inférieur au degré de métallisation de Ni dudit mélange réduit, et à chauffer et à faire fondre le mélange réduit pour préparer un produit fondu réduit ;
    une étape de solidification consistant à refroidir le produit réduit dans le four à sole mobile afin de préparer un solide réduit ou à décharger le produit réduit du four à sole mobile pour refroidir la coulée réduite afin de préparer un solide réduit ; et
    une étape de séparation consistant à séparer le produit fondu réduit en métal et scorie afin de préparer du ferronickel.

5. Procédé de production de ferronickel selon la revendication 4, dans lequel le degré de métallisation de Ni est de 85 % ou plus.

# FIG. 1

# FIG. 2

# FIG. 3

# FIG. 4

## FIG. 5

## FIG. 6

# FIG. 7

# FIG. 8

# FIG. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 48043766 A
- JP 9291319 A
- JP 5186838 A
- JP 5247581 A
- JP 11229017 A

**Non-patent literature cited in the description**

- **TEKKO BINRAN.** The Iron and Steel Institute of Japan. The Iron and Steel Institute of Japan, 30 July 2002, vol. 2